# EUROPEAN PATENT SPECIFICATION

(11) **EP 1 473 500 B1**
(45) Date of publication and mention of the grant of the patent: **14.06.2006**
(21) Application number: 03425259.3
(22) Date of filing: 28.04.2003
(51) Int. Cl.: F16L 3/26, F16L 3/24

(54) **System of connection means for a cable way supporting device**
Befestigungssystem für die Stützvorrichtung einer Kabelstrecke
Système de connexion pour un dispositif de maintien d'un chemin de câbles

(43) Date of publication of application: 03.11.2004
(73) Proprietor: S.I.M.E.T. s.n.c. di Zanardo Stefano & C., 31020 Tezze di Vazzola (TV) (IT)
(72) Inventor: Palu', Claudio,SIMET SNC di Zanardo Stefano & C., 31020 Tezze di Vazzola (TV) (IT); Pizzin, Cristina,SIMET SNC di Zanardo Stefano & C., 31020 Tezze di Vazzola (TV) (IT); Zanardo, Stefano,SIMET SNC di Zanardo Stefano & C., 31020 Tezze di Vazzola (TV) (IT)
(74) Representative: Ferraiolo, Ruggero

(56) References cited:
- CH-A- 687 168
- GB-A- 1 163 687
- GB-A- 2 016 580
- GB-A- 2 093 519
- US-A- 2 749 068
- US-A- 6 098 942

## Description

The invention concerns a system of connection means for a cable way supporting device, in particular a system of stud elements, clamping means, horizontal cable way and devices for supporting the cable way which is generally in the form of bendable or not bendable metal rods or wire ropes or straps that, in civil and industrial building and in the ship construction, are provided with ribs, rings, hooks, clamps or the like and, in turn, hold cabling and pipes in general as groups of wires, cables, pipes and hoses, for example for low voltage transmission, telephone and antenna wires, fiber optic cables, wires for fire alarm systems, air and other fluids transmission. In general, these cable ways run along a vertical wall, a ceiling, a floor and may be hidden behind a false wall, ceiling or bottom.

In the description and in the claims,
- the ribs and rings, which may be open or closed, and the hooks and clamps are referred to as -rib(s) - in the cable way;
- the rib bearing rod and the wires passing through the ribs form a cable way; devices are needed for suporting such cable way along a wall;
- said cabling and pipes are referred to as-wire(s)- only;
- said rib bearing rods or wire ropes or straps are referred to as -rib bearing rod(s)- only;
- a wall, a ceiling or a floor are referred to as -wall(s)- only;

A number of devices are known in this technical area. Document US 1381237 published in June 1921 discloses a conduit or cable clamp and bridle ring adapted to support one or more runs of wires. Document US 6364255 published in April 2002 discloses a modular center spine cable way for securing wires above a drop ceiling, the central spine having a number of spaced ribs attached perpendicular to the spine and provided for receiving single or groups of wires. neverthless, these documents do not give information about means for securing the said clamp and center spine to the wall, the selection of such securing means being a problem whose solution makes the installation of said wires easy and cheap or difficult and costly, taking into account that in a civil, industrial building or ship the extent of this installation implies laying kilometers of wires. Document EP 0 728 975 Al appears as the only one that discloses means for securing the device to a wall; two arms extend from a central perpendicular projection whereas at the end of each arm one eye or rib is formed parallel to the opposite one for receiving wires, the projection being adapted to be forced in a hole in the wall and fixed therein by welding. The device is generally 60 - 80 cm long and laying kilometers of wires requires a number of welding operations which is costly and my be 1 dangerous for the operator. Document CH 687168 representing the closest prior art discloses a fixing device for vertical electrical installations in a building in the form of horizontal mounting rails 1 parallel each other having the purpose of holding cables and lines 3 wherein the plurality of these mounting rails 1 are pre-assembled at a distance a each from another along vertical connection flexible elements 2 parallel each other and secured to a wall. The device may be arranged as a roll so as to be delivered in the operation area as a rolled rope ladder. Means 11, 12 for fastening the rails 1 to the flexible elements 2 and the cables and lines 3 to the rails 1 are provided.

As specified in claim 1, the invented system comprises : at least one row of anchor stud elements spaced one from another and adapted to be embedded into and extending from a wall; at least two clamping means each clamped on an anchor stud element; held by the clamping means, a horizontal cable way supporting device consisting of a rib bearing rod and a number of ribs spaced along and secured to the rod for supporting spans of passing through wires.

The rows of stud elements are parallel or cross each other, the stud elements may extend from a vertical to a horizontal position from a wall and and each stud element may hold more than one clamping means.

The advantages of this system reside in that no welding and metal clips are needed, the erection of the whole system comprising the anchor stud elements, the connection means, the rods and the wires is very rapid, the cost of the connection means is low and, finally, the system may be disassembled if necessary allowing recovering of all material, with the exception of the anchor stud elements.

The invention will be described in detail by an example with the aid of the drawing where:
- Fig. 1 is a first side view,
- Fig. 2 is a first perspective view,
- Fig. 3 is a second side view,
- Fig. 4 is a second perspecitve view,
- Fig. 5 is a third side view,
- Fig. 6 is a fourth side view,
- Fig. 7 is a fifth side view and
- Fig. 8 is a cross section view.

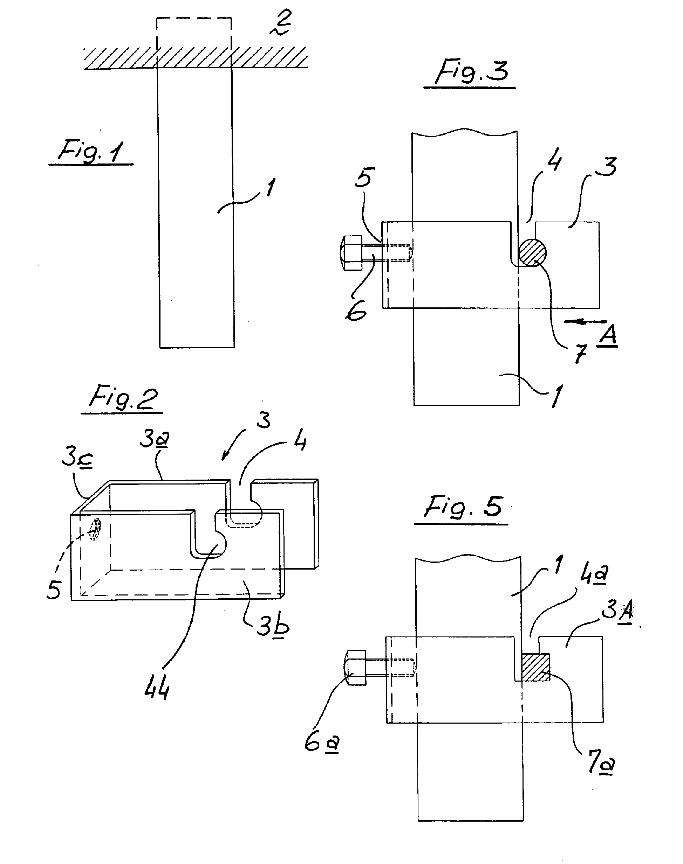

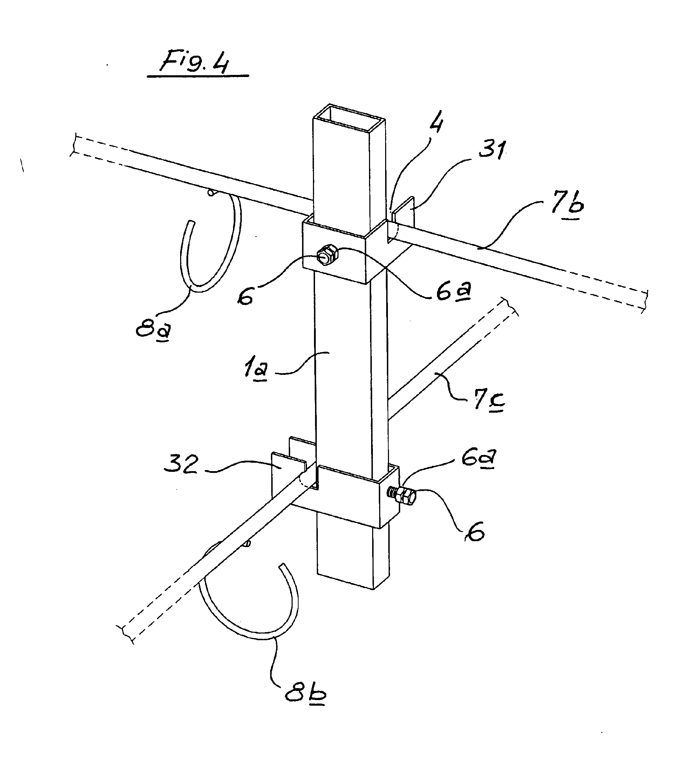

Fig. 1 shows a steel anchor stud element 1 embedded into and extending from a ceiling 2. This element has square or rectangular cross section and generally is one of a row of anchor stud elements each of which may be used for receiving one or more clamping means, as illustrated in the following figures.
Fig. 2 shows a clamping means in the form of a steel yoke 3 which comprises two side faces 3a, 3b, each having a seat 4 symmetrical with the corresponding seat 4 in the parallel face, the seats comprising a lower region where the end 44 opposite to the rear face 3c is partly round for receiving a steel rib bearing rod, the rear face 3c having a threaded hole 5 for receiving fixing means; the system comprises at least two yokes each yoke being adapted to fit in and along an anchor stud element of the row.
Fig. 3 shows that the yoke 3 is fitted in a convenient position along the anchor stud element 1 and a rib bearing rod 7 is received in the round parts of the seats 4 and is clamped between said parts and the front face of the anchor stud element 1 once the fixing means in the form of a screw 6 is tightened against a face of said element. It goes without saying that all dimensions and shapes of the yoke fit the dimensions of both the anchor stud element and rib bearing rod; in particular, the dimensions and position of the seats 4 will be such that, once the rib bearing rod 7 is into the seats and the screw 6, screwed into the threaded hole 5, is being tightened, the yoke 3 slides according to arrow A until rod 7 is strongly clamped as described above. The screw 6 will be preferably provided with a lock nut, not shown in this figure.

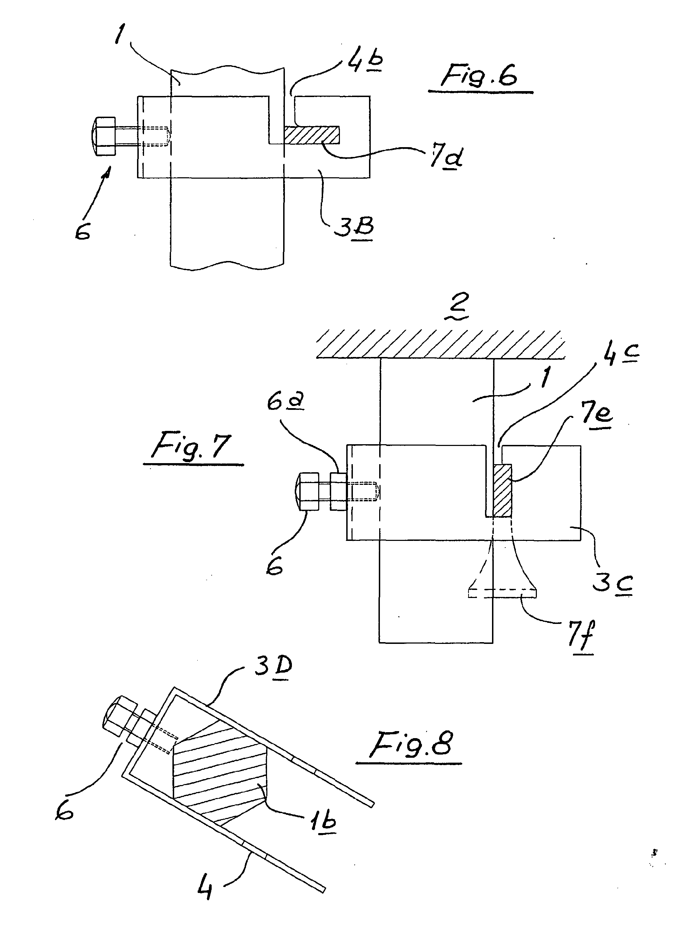

Fig. 4 shows that an anchor stud element 1a of rectangular cross section has two yokes 31, 32 fitted therein in their convenient positions; yoke 31 clamps a rib bearing rod 7b provided with a number of open ribs 8a, only one of which is shown; yoke 32 clamps a rib bearing rod 7c provided with a number of open ribs 8b, only one of which is shown. The yokes and relevant rib bearing rods are at 90° one to the other. This enbodiment makes a cable way change direction of 90°. Numbers 4 and 6 refer to parts already mentioned in Fig. 3 and 6a shows a lock nut ready for tightening against the yoke. From this figure it may be realized that the connection means comprise a group of equal yokes in case the anchor stud element is of square cross section, alternatively they are a group of two different types of yokes, one type for fitting in a first section of the element and the another type for fitting in the second section turned 90°, in case the anchor stud element is of rectangular cross section. It is realized that an anchor stud element may be fitted by a number of yokes, as the case may be and as allowed by the extension of the element.
Fig. 5 simply shows a yoke 3A, fitted in an anchor stud element 1, whose seat 4a is adapted to clamp a rib bearing rod 7a of square cross section under the action of the screw 6a.
Fig. 6 shows a yoke 3B, fitted in an anchor stud element 1, whose seat 4b partly in the form of a horizontal slot is adapted to clamp a rib bearing rod in the form of a steel strap 7b laying horizontal.
Fig. 7 shows a yoke 3C, fitted in an anchor stud element 1, whose seat 4c partly in the form of a vertical slot is adapted to clamp a rib bearing rod in the form of a steel strap 7e laying vertical; this strap may be mounted in the spans between adjacent anchor stud elements so slack as to become horizional spontaneously at a distance from the clamping points under the charge of the wires hold by the ribs, as shown by 7f; alternatively, this strap may mantain vertical all along the span in case it is mounted well stretched between djacent clamping points.
Fig. 8 shows an anchor stud element 1b of hexagonal cross section fitted by one yoke 3D; it is realized that this anchor stud element may be fitted by yokes laying in three directions as well as, in case anchor stud elements are polygonal, yokes may lay accordingly in several directions; seats 4 and screwing means 6 are also shown.

## Claims

1. System of connection means for a cable way supporting device provided with means for anchoring the system to a wall in a building or a ship and for supporting horizontal groups of wires **characterized in that** it comprises : at least one row of anchor stud elements (1, 1a, 1b) spaced one from another and adapted to be embedded into and extending from the wall (2); at least two clamping means (3) each clamped on an anchor stud element; held by the clamping means, a horizontal cable way supporting device consisting of a rib bearing rod (7, 7a, 7b) and a number of ribs (8a, 8b) spaced along and secured to the rod for supporting spans of passing through wires.

2. System of connection means according to claim 1 **characterized in that** it comprises a group of equal clamping means (3) for fitting a number of anchor stud elements (1) of equal square cross section.

3. System of connection means according to claim 1 **characterized in that** it comprises at least two groups of clamping means (31, 32, 3D) for fitting a number of anchor stud elements (1, 1B) respectively of rectangular or polygonal cross section.

4. System of connection means according to claims 1-3 **characterized in that** the clamping means (3) comprise seats (4) defining a lower region where an extension (44) opposite to the rear face (3c) of the clamping means is partly round for receiving a rib bearing round rod (7).

5. System of connection means according to claims 1-3 **characterized in that** the clamping means (3A) comprise seats (4a) defining a lower region where the extension opposite to the rear face (3c) of the clamping means is partly squared for receiving a rib bearing square rod (7a).

6. System of connection means according to claims 1-3 **characterized in that** the clamping means (3B) comprise seats (4b) partly defining a horizontal slot for receiving a rib bearing rod in the form of a strap (7d).

7. System of connection means according to claims 1-3 **characterized in that** the clamping means (3C) comprise seats (4c) partly defining a vertical slot for receiving a rib bearing rod in the form of a strap (7e).

## Patentansprüche

1. Befestigungssystem für die Stützvorrichtung einer Kabelstrecke versehen mit Mitteln zur Verankerung des Systems an einer Wand in einem Gebäude oder einem Schiff und zum Stützen horizontaler Gruppen von Drähten, **dadurch gekennzeichnet, dass** das System aufweist:
wenigstens eine Reihe Verankerungsstiftelemente (1, 1a, 1b) die zueinander beabstandet sind und so ausgebildet sind, dass sie in die Wand (2) und an dieser vorstehend eingebettet werden können; wenigstens zwei Klemmmittel (3) die jeweils an ein Verankerungsstiftelement angeklemmt sind; eine horizontale Kabelstreckenhaltevorrichtung, die durch die Klemmmittel gehalten wird, bestehend aus einer rippentragenden Stange (7, 7a, 7b) und einer Anzahl von Rippen (8a, 8b), die entlang der Stange beabstandet und an dieser befestigt sind, um Spannen hindurchgehender Drähte zu halten.

2. Befestigungssystem nach Anspruch 1, **dadurch gekennzeichnet, dass** es eine Gruppe von gleichen Klemmmitteln (3) zur Befestigung einer Anzahl von Verankerungsstiftelementen (1) mit gleichem quadratischem Querschnitt aufweist.

3. Befestigungssystem nach Anspruch 1, **dadurch gekennzeichnet, dass** es wenigsten zwei Gruppen Klemmmittel (31, 32, 3D) zum jeweiligen Befestigen einer Anzahl von Verankerungsstiftelementen (1, 1B) mit rechteckigem oder polygonalem Querschnitt aufweist.

4. Befestigungssystem nach Anspruch 1 bis 3, **dadurch gekenneichnet, dass** die Klemmmittel (3) Sitze (4) aufweisen, die einen unteren Bereich definieren, wo eine Verlängerung (44) gegenüber der Rückfläche (3c) der Klemmmittel teilweise rund ist, um eine, eine Rippe tragende, runde Stange (7) aufzunehmen.

5. Befestigungssystem nach Anspruch 1 bis 3, **dadurch gekennzeichnet, dass** die Klemmmittel (3A) Sitze (4a) aufweisen, die einen untern Bereich definieren, wo die Verlängerung gegenüber der Rückseite (3c) der Klemmmittel teilweise quadratisch ist, um eine, eine Rippe tragende, quadratische Stange (7a) aufzunehmen.

6. Befestigungssystem nach Anspruch 1 bis 3, **dadurch gekennzeichnet, dass** die Klemmmittel (3B) Sitze (4b) aufweisen, die teilweise einen horizontalen Schlitz definieren, um eine, eine Rippe tragende Stange in Form eines Streifens (7d) aufzunehmen.

7. Befestigungssystem nach Anspruch 1 bis 3, **dadurch gekennzeichnet, dass** die Klemmmittel (3C) Sitze (4c) aufweisen, die teilweise einen vertikalen Schlitz definieren, um eine, eine Rippe tragende Stange in Form eines Streifens (7e) aufzunehmen.

## Revendications

1. Un système de moyens de connexion pour un dispositif support de chemin de câble, muni de moyens pour l'ancrage du système à une paroi ou mur, dans un bâtiment ou un navire, et pour supporter des groupes horizontaux de câbles, **caractérisé en ce qu'**il comprend :
au moins une rangée d'éléments de tétons d'ancrage (1, 1a, 1b), espacés les uns des autres et adaptés pour être incorporés et s'étendre depuis la paroi (2) ; au moins deux moyens de serrage (3) chacun serré sur un élément de téton d'ancrage ; maintenu par les moyens de serrage, un dispositif support de chemin de câble horizontal, constitué d'une tige support de joncs (7, 7a, 7b) et d'une pluralité de joncs (8a, 8b) espacés le long de et fixés à la tige pour supporter des portées de passage de câble traversant.

2. Système de moyens de connexion selon la revendication 1, **caractérisé en ce qu'**il comprend un groupe de moyens de serrage (3) identiques, pour ajustement d'une pluralité d'éléments de tétons d'ancrage (1) ayant une section transversale carrée identique.

3. Système de moyens de connexion selon la revendication 1, **caractérisé en ce qu'**il comprend au moins deux groupes de moyens de serrage (31, 32, 3D), pour ajustement d'une pluralité d'éléments de tétons d'ancrage (1, 1B) respectivement, ayant une section transversale rectangulaire ou polygonale.

4. Système de moyens de connexion selon les revendications 1 à 3, **caractérisé en ce que** les moyens de serrage (3) comprennent des sièges (4), définissant une région inférieure, dans laquelle une extension (44), opposée à la face arrière (3c) des moyens de serrage, est en partie ronde, pour recevoir une tige ronde (7) de support de joncs.

5. Système de moyens de connexion selon les revendications 1 à 3, **caractérisé en ce que** les moyens de serrage (3A) comprennent des sièges (4a), définissant une région inférieure, dans laquelle l'extension opposée à la face arrière (3c) des moyens de serrage est en partie carrée, pour recevoir une tige carrée de support de joncs (7a).

6. Système de moyens de connexion selon les revendications 1 à 3, **caractérisé en ce que** les moyens de serrage (3B) comprennent des sièges (4b), définissant partiellement une fente horizontale, pour recevoir une tige support de joncs ayant la forme d'une patte (7d).

7. Système de moyens de connexion selon les revendications 1 à 3, **caractérisé en ce que** les moyens de serrage (3C) comprennent des sièges (4c), définissant partiellement une fente verticale, pour recevoir une tige support de joncs ayant la forme d'une patte (7e).
